Europäisches Patentamt

European Patent Office

Office européen des brevets

(19)

(11) Publication number: **0 202 348**
**A1**

# (12) EUROPEAN PATENT APPLICATION

(21) Application number: **85106143.2**

(22) Date of filing: **18.05.85**

(51) Int. Cl.⁴: **D 06 B 5/20**

(43) Date of publication of application:
**26.11.86 Bulletin 86/48**

(84) Designated Contracting States:
**AT BE CH DE FR GB LI LU NL SE**

(71) Applicant: **Scatizzi, Mario**
**Via San Quirico 25**
**Pistoia(IT)**

(72) Inventor: **Scatizzi, Mario**
**Via San Quirico 25**
**Pistoia(IT)**

(74) Representative: **Sassatelli, Franco**
**INIP via Ruggi 5**
**I-40137 Bologna(IT)**

(54) **Apparatus for the quick dyeing of hanks with a low bath ratio.**

(57) The hanks are laid on a material bearing arm (A) inserted on a mobile wall (P) which acts as a proof closing door of the dyeing tank. At its end the arm is properly conceived for being introduced into a motor lodging on the opposite side, on the moving wall, in the dyeing tank. By means of this contrivance, the arm is motorized and, therefore, kept in constant rotating motion both in clockwise and anticlockwise sense in order to avoid entanglement of the hanks. The dyeing bath is constantly injected and recirculated on the hanks which are kept in continuous motion by means of a system of pump (D) and bored injection pipes (B).

This double aspect, continuous injection and rotation, allows a very quick renewal of the dye molecule contact dissolved in the solution of the dyeing tank with the textile material and their respective hooking powers. Therefore, by increasing the contacts of the dyeing substance with the textile material, the temperature increasing time can be reduced which is indispensable for the colour fixing with a consequent considerable reduction of the dyeing times.

By shortening the execution times, productivity is sensibly increased, the small quantity of water required by this procedure allows an energetic saving as well as an enormous advantage from the economic and ecologic point of view.

FIG 6

EP 0 202 348 A1

TITLE MODIFIED
see front page

- 1 -

Machine for quick dyeing and in a reduced yarn bath in hanks with extractable arms.

The hanks are laid in the special housings of the material bearing arm (A) fitted on a mobile wall (P). This arm is finned to facilitate dragging and, therefore, the rotation of the hanks. The end part (R) of the arm (A) is conceived so as, when it has been insert ed in the housing foreseen for this purpose (S), it kept in constant rotation by means of a suitable motorization (C). This rotation has been foreseen both for clockwise and anticlockwise rotation and viceversa, in order to avoid the hank entanglement, and moreover the rotation speed is foreseen variable at wish for the contingent wor king requirements.

When the hanks are already in motion, the solution is introduced which contains the colouring material and any other chemical product requir ed for the dyeing operation, already at the wished temperature, by means of the pump (D), in the container foreseen for this purpose (H), already fitted in advance for the preliminary dyeing operations.

The dyeing bath forced circulation is then begun through the bored injection pipes (B) and by means of the pump (D) this is injected on the textile material, which is kept in constant movement, by steadily spraying it. Therefore, the hanks are continuously and completely enfolded in the flux of the colouring solution and, from the dyeing point of view, as if they were dipped into the same solution. The dyeing bath then falls into the collecting tank (T) and from here is quickly put again into circulation by the pump (D) through the bored injection pipes (B). In the collecting tank (T) a heat exchanger is lodged (F) which allows to increase the temperature according to a programm established in advance and controlled by an automatic valve (G) controlled by a special programming device inserted in the control board.

At the cycle end, the material bearing arm (A) is disengaged in the motorized point (S), with the fulcrum of the arm (R) is extracted along with the wall (P) from the dyeing tank and laid to the unloading of the dyed material, while a second arm already charged with other material to dye is inserted at once and led to a new dyeing phase.

The present machinery with arms does not allow such contrivances and, in particular, it does not foresee a continuous rotating motion of the hanks, but a short movement with prolonged stops, and a bath circulation not continuous either which foresees the injection only when the material is stopped and on only one point of the hank. The previous loading on an outer material bearing arm is not foreseen and, consequently idle times occur in the employ of the machine. The use of larger quantities of water both during the dyeing processing and washing as well as rinsing, considerably increase the management costs; at last, since a shortened dyeing processing in the execution times is not possible, the production is much lower.

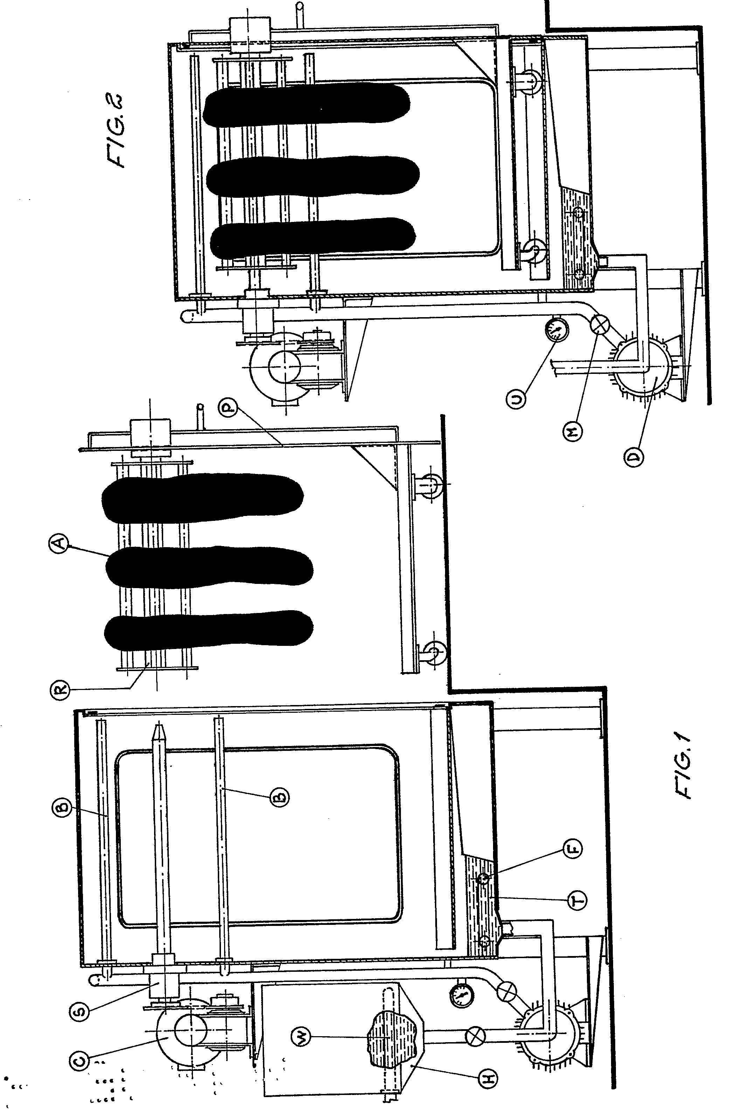

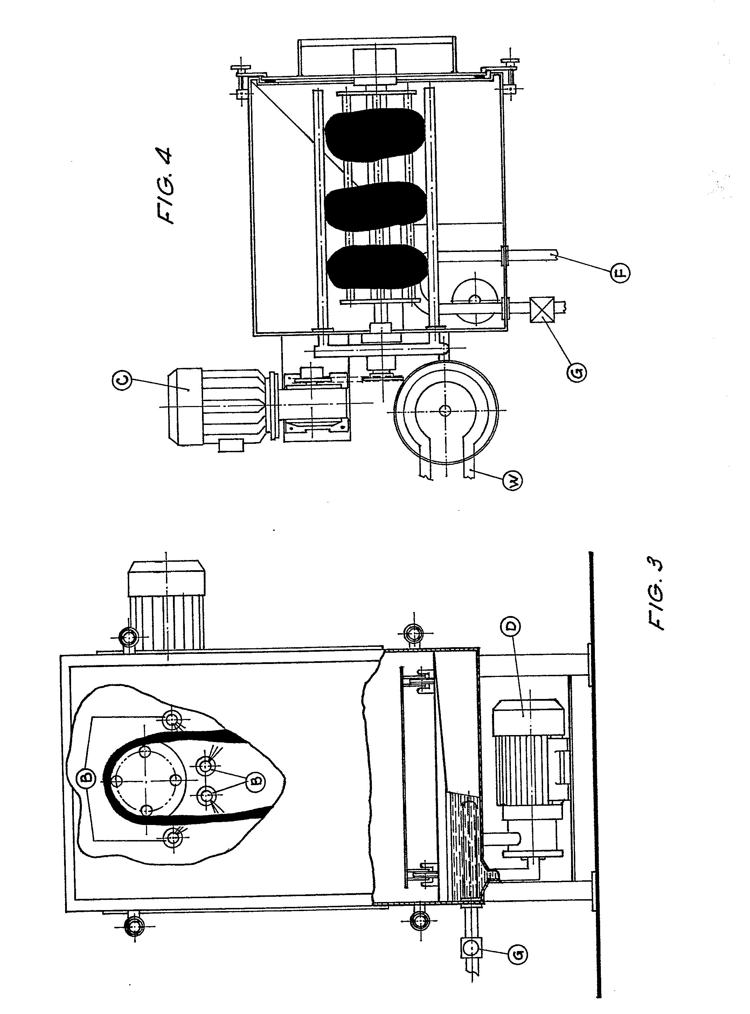

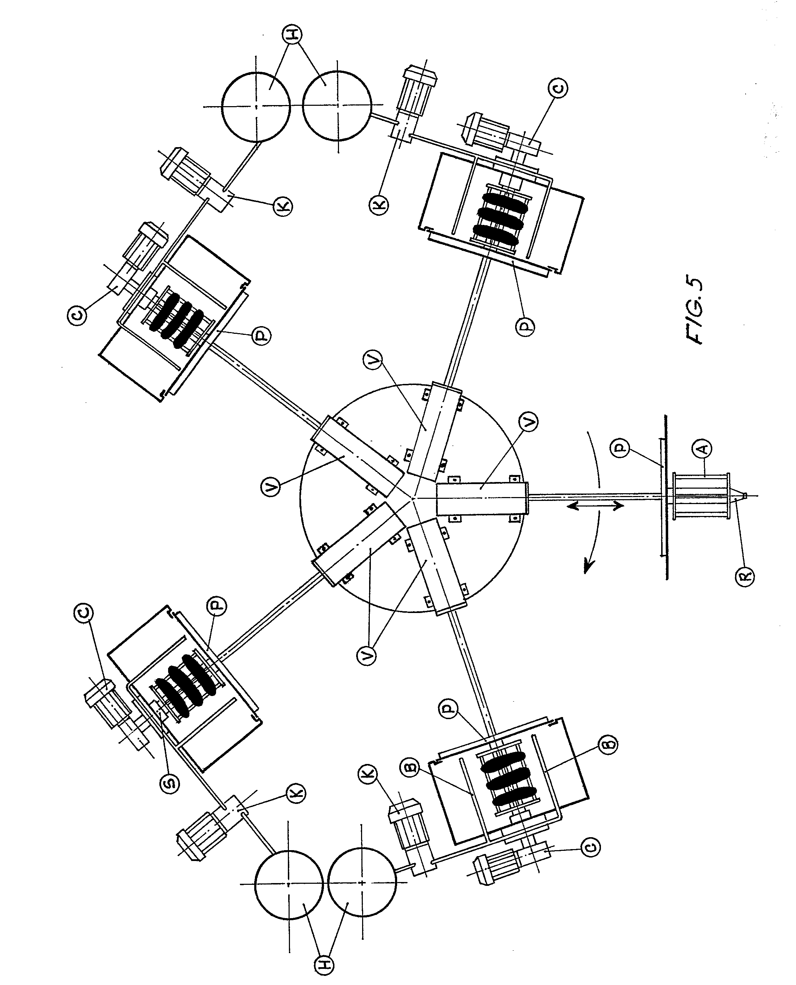

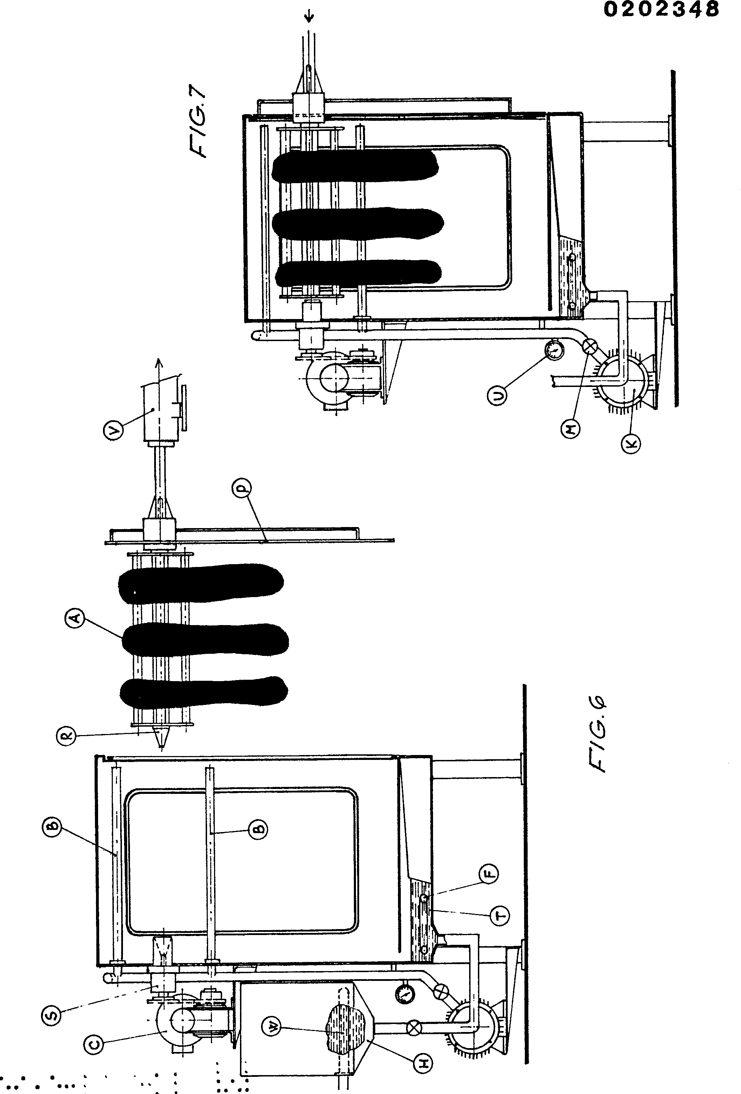

A merely indicative execution form of what procedes is illustrated by the drawings of Tables 1, 2, 3 and 4. Figure 1 represents a side

0202348

section with the two detached parts of the machine (dyeing tank and arm with mobile wall); Fig. 2 the same section with the two joined parts, namely the machine in the working phase; Fig. 3 represents a front section of the same machine and Fig. 4 one seen from above. Fig. 5 represents the complete installation seen from above, whereas figs. 6 and 7 represent some execution particulars.

- 1 -

0202348

Claims.

1) Machine for quick dyeing yarn hanks in reduced bath with extractable arms, characterized by the fact that the hanks to dye are put on a material carrying arm (A) fitted on a mobile wall (P). Wall (P) is built so as it perfectly seals the dyeing tank in a proof way when the arm (A) is inserted into the housing foreseen for this purpose inside the dyeing tank. The above arm is longitudinally finned in order to facilitate dragging and consequently the rotation of the hanks. The rotation can be either clockwise or anticlockwise and viceversa, and is obtained by inserting the end part (R) of the arm (A) into the special housing fit for being motorized by means of a motor system (C). The speed is variable and can be controlled at wish according to the requirements of the dyeing cycle. When the hanks are in movement, the solution taken from the stockage container (H) foreseen for this purpose is introduced and injected through the bored injection pipes (B) and, by means of pump (H), incessantly injected into the hanks which are kept in steady clockwise and anticlockwise rotation. The dyeing solution falling on the plane of the tank is collected in the lodging (T) and from here is heated according to a programmed increase of temperature by means of a programming device inserted in the control board. From the collecting tank (T), the solution is recirculated through the pump (D) and injected again on the hanks which are incessantly kept in rotating movement. At the cycle end, the arm (A) containing the dyed hanks and the mobile wall (P), after having disinserted the lodging (S) engagement and by disengaging the shaft (R) of the arm (A), is extracted and a second arm is inserted into its place with mobile wall and quite identical to the first one; this second arm has been previously and separately charged with other material ready to be dyed.

2) Machine for quick dyeing yarn hanks in reduced bath, with extractable arms, as to claim 1, characterized by the fach that a heat exchanger (W) is lodged in the stockage tank (H) in order to plan and prepare the starting temperature of the dyeing cycle to save time in performing the dyeing operation. Moreover, in this tank all the components necessary for dyeing are put: the required quantity of water, the chemical products, the dyes etc.

3) Machine for quick dyeing yarn hanks in reduced bath with extractable arms, according to claims 1 and 2, characterized by the fact that the spraying pipes (B) forcedly inject the dyeing bath both from the circumference inside and outside and in many points of the same. Their number, in fact, their positioning, the type and quantity of orifices of injection correspond to the specific requirements. The injection pressure and, consequently the quantity of the circulating solution in the unity of time is controlled by means of an adequate shutter (M) and pressure gauge (U).

4) Machine for quick dyeing yarn hanks in reduced bath with extractable arms, according to claims 1, 2 and 3, characterized by the fact that a completely automatic execution is foreseen. The installation has been conceived to carry out all the different operations or working phases in an automatic and programmable way in the whole dyeing operating cycle. These phases occur in many compartments or different stations, in order to limit losses of time and, therefore, to make the most of the quick dyeing cycle. The machine consists of a central motorized rotor on which many arms (A) are fitted for bringing the material and on a mobile wall (P) foreseen for forming a proof closure when the joint of the material bringing arm (A) is inserted into the dyeing tank in the motor housing (S) foreseen for this purpose. By means of pistons or other fit system (V), the material bringing arm (A) and the mobile walls (P) are quickly engaged and disengaged in the dyeing tanks. When a working phase is over, the rotor with a proper motion lets change a position, namely position no.1 passes to position no. 2, this one passes to position no. 3, the latter passes to position no. 4, position no. 4 passes to position no. 5 and position no. 5 passes to position no. 6. Therefore, four different operations practically occur in the same moment: in position no. 1, the loading and unloading of the material to be dyed and of the one already dyed takes place respectively, in position no. 2, the dyeing operation is taking place; in position no. 3 cooling and washing are performed; in positions no. 4 and 5 the other operations are carried out which have variable character according to the different dyeing cycles and may be: additional washing, softening, squeezing etc. The coloured solutions required in the different dyeing phases (2) and the chemical products required for washing (3) and treatments (4 and 5) are fed through one or more containers (H) and by means of input pumps (K). The solutions are automatically supplied both for the dyeing phase and for the other ones, by means of a programming device which regulated the logical succesion of any cycle operations. As soon as the material bringing arm (A) has been inserted, the mobile wall (P) shuts the tank and the cycle begins in each of the four stations, namely: rotation of the hanks, injection and recycling of the solution and, where it is required, the beginning of the programmed thermic excursion as per claim no. 1. As it can be easily noted from Table no. 3, in position (1) the dyed material is discharged and the new material to dye is recharged on the same arm. The number of the material bearing arms (A), of course, is in accordance with the specific requirements.

5) Machine for quick dyeing yarn hanks in reduced bath with extractable arms, according to the claims 1, 2, 3 and 4, characterized by the fact that a variant is foreseen to the machine described in claim no. 1, and namely the material bearing arm (A) instead of being fitted on a moble wall (P), can be positioned on a mobile truck which by completely penetrating into the dyeing tank, carries out its closing with conventional type doors.

0202348

FIG.1

FIG.2

FIG. 4

FIG. 3

0202348

FIG.5

FIG.6

FIG.7

4/4

0202348

## EUROPEAN SEARCH REPORT

### European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-1 460 401  (GERBER) <br> * Whole document * | 1 | D 06 B    5/20 |
| A | | 2-4 | |
| | --- | | |
| Y | DE-A-1 966 527  (CROON & LUCKE) <br> * Whole document * | 1 | |
| | --- | | |
| A | US-A-2 968 175  (AMERICAN VISCOSE) | | |
| | --- | | |
| A | US-A-3 969 074  (HUI DO CHUNG) | | |
| | --- | | |
| A | DE-A-2 163 375  (EUGEN BELLMANN) | | TECHNICAL FIELDS SEARCHED (Int. Cl.4) |
| | --- | | D 06 B |
| A | FR-A-1 408 565  (LORIS BELLINE) | | |
| | ----- | | |

The present search report has been drawn up for all claims

| Place of search | Date of completion of the search | Examiner |
|---|---|---|
| THE HAGUE | 21-01-1986 | PETIT J.P. |